# EUROPÄISCHE PATENTSCHRIFT

(11) **EP 3 396 806 B1**
(45) Veröffentlichungstag und Bekanntmachung des Hinweises auf die Patenterteilung: **25.12.2019**
(21) Anmeldenummer: 18169256.7
(22) Anmeldetag: 25.04.2018
(51) Int. Cl.: H02J 3/38, H02J 7/35

(54) **WECHSELRICHTERANORDNUNG MIT SOLARZELLEN UND BATTERIEN**
INVERTER ASSEMBLY WITH SOLAR CELLS AND BATTERIES
DISPOSITIF D'ONDULEUR AVEC DES CELLULES SOLAIRES ET BATTERIES

(30) Priorität: 27.04.2017 DE 102017004171
(43) Veröffentlichungstag der Anmeldung: 31.10.2018
(73) Patentinhaber: Kostal Industrie Elektrik GmbH, 58513 Lüdenscheid (DE)
(72) Erfinder: ITZENGA, Dirk, 44309 Dortmund (DE); ENGEL, Sergej, 59439 Holzwickede (DE)
(74) Vertreter: Kerkmann, Detlef

(56) Entgegenhaltungen:
- EP-A1- 2 426 570
- EP-A1- 2 926 431
- DE-A1-102013 111 608
- US-A1- 2015 229 131

## Beschreibung

Die Erfindung betrifft eine Wechselrichteranordnung für eine Photovoltaikanlage, mit mehreren Gleichspannungseingangsanschlüssen, an die jeweils ein Photovoltaikgenerator angeschlossen werden kann und von denen mindestens ein Gleichspannungseingangsanschluss alternativ zum Anschluss einer Speicherbatterie geeignet ist, wobei alle Gleichspannungseingangsanschlüsse jeweils über einen Gleichspannungswandler gemeinsam mit dem Eingang einer Wechselrichterbrücke verbunden sind, und mit einem Controller, der die Gleichspannungswandler und die Wechselrichterbrücke steuert, und der anhand von an dem mindestens einen Gleichspannungseingangsanschluss erfassten Spannungs- und/oder Stromverläufen eine angeschlossene Speicherbatterie erkennen kann.

Wechselrichteranordnungen für Photovoltaikanlagen besitzen im Allgemeinen mehrere Gleichspannungseingangsanschlüsse, an die Photovoltaikgeneratoren angeschlossen werden können. Viele Wechselrichteranordnungen besitzen darüber hinaus einen speziellen Eingangsanschluss zum Betrieb einer Speicherbatterie.

Die Eingangsanschlüsse sind dabei oftmals für Photovoltaikgeneratoren und für Speicherbatterien unterschiedlich ausgestaltet, was insofern sinnvoll erscheint, da auch die internen Beschaltungen dieser Eingangsanschlüsse speziell für diese Gleichspannungsquellen ausgelegt sind. Daher kann am jeweiligen Eingangsanschluss nur das jeweils Passende angeschlossen und betrieben werden. Nachteilig ist, dass derart ausgeführte Wechselrichteranordnungen damit recht unflexibel in ihrer Verwendung sind.

Sind beispielsweise zwei Photovoltaikanschlüsse und ein Batterieanschluss vorhanden, so ist damit auch maximal der Anschluss von zwei Photovoltaikgeneratoren und einer Speicherbatterie möglich. Dieses ist nachteilig, wenn eine vom Verwender bevorzugte Anschlusskonfiguration von den vorhandenen Anschlussmöglichkeiten abweicht, also wenn beispielsweise drei Photovoltaikgeneratoren oder zwei Speicherbatterien an einer solchen Wechselrichteranordnung betrieben werden sollen. Erwünscht ist daher mindestens ein mehrfunktioneller Eingangsanschluss, an den wahlweise sowohl ein Photovoltaikgenerator als auch eine Speicherbatterie angeschlossen werden kann.

Aus der deutschen Offenlegungsschrift DE 10 2013 111 608 A1 ist eine Photovoltaikanlage mit einem Wechselrichter bekannt, welcher mehrere Gleichstromeingänge für Photovoltaikgeneratoren aufweist, wobei mit einem Gleichstromeingang, an den kein Photovoltaikgenerator angeschlossen ist, auch eine Speicherbatterie verbunden werden kann.

Die Speicherbatterie kann dabei über eine vom Wechselspannungsausgang der Photovoltaikanlage gespeiste Ladeeinrichtung geladen werden, wobei die externe Ladeeinrichtung und der interne Wechselrichter zusätzlich über jeweils einen Kommunikationsanschluss miteinander verbunden werden. Die Ladeeinrichtung ist hier insbesondere als Bestandteil eines Nachrüstsatzes vorgesehen, der eine Photovoltaikanlage mit der Anschluss- und Lademöglichkeit für eine Speicherbatterie ausstattet.

Die Photovoltaikanlage in der DE 10 2013 111 608 A1 erfordert somit eine speziell auf die Photovoltaikanlage zugeschnittene Ladeeinrichtung, die insbesondere eine gegenseitige Kommunikations- und Steuerungsmöglichkeit mit dem Wechselrichter der Photovoltaikanlage vorsieht. Der externe Anschluss der Ladeeinrichtung ermöglicht es, einen vorher für einen Photovoltaikgenerator vorgesehenen Eingang nachträglich zum Anschluss einer Speicherbatterie umzukonfigurieren. Ein solches Vorgehen ist zwar zielführend, erscheint aber auch umständlich und unkomfortabel.

Es stellte sich die Aufgabe eine Wechselrichteranordnung so auszubilden, dass sie einfache und flexible Anschlussmöglichkeiten von Photovoltaikgeneratoren und Speicherbatterien ermöglicht und einen einfachen Aufbau aufweist.

Diese Aufgabe wird erfindungsgemäß durch die Merkmale des unabhängigen Anspruchs 1 gelöst.

Die Europäische Patentanmeldung EP 2 426 570 A1 beschreibt eine Wechselrichteranordnung mit einem Controller und einem vorgeschalteten Gleichspannungswandler mit Gleichspannungsanschlüssen und einer Kommunikationsschnittstelle zu einer Speicherbatterie. Die Wechselrichteranordnung weist nur einen einzigen Gleichspannungseingang zum Anschluß eines Photovoltaikgenerators und einer Speicherbatterie auf.

Die erfindungsgemäße Wechselrichteranordnung sieht mindestens einen Eingangsanschluss vor, an den wahlweise ein Photovoltaikgenerator oder eine Speicherbatterie anschließbar ist, ohne dass zusätzliche externe Schaltungsmittel erforderlich sind. Die Wechselrichteranordnung bestimmt dazu über einen insbesondere zum Eingangsanschluss gehörenden Kommunikationsanschluss automatisch die Art der angeschlossenen Gleichspannungsquelle und erkennt darüber hinaus nicht geeignete oder falsch angeschlossene Geräte, wie beispielsweise eine verpolt angeschlossene Speicherbatterie.

Alternativ oder zusätzlich kann auch vorgesehen werden, dass die Art der an jedem Gleichspannungseingangsanschluss anzuschließenden Spannungsquelle durch einen Benutzer manuell eingestellt werden kann. In diesem Fall überprüft den der Controller anhand von Daten der mindestens einen Kommunikationsstelle und/oder anhand von erfassten Strom- und oder Spannungsdaten die Übereinstimmung zwischen den Einstellungen und den tatsächlich vorgenommenen Anschlüssen, und veranlasst bei einem Fehlanschluss eine Abschaltung des jeweiligen Gleichspannungseingangsanschlusses.

In einer bevorzugten Ausgestaltung können auch mehrere oder insbesondere alle Eingangsanschlüsse der Wechselrichteranordnung zum wahlweisen Anschluss von Photovoltaikgeneratoren oder Speicherbatterien ausgeführt sein. In diesem Fall kann eine beliebige Kombination dieser Eingangsspannungsquellen vorgesehen werden, die dann beliebig mit den Eingangsanschlüssen verbunden werden können.

In dieser Ausgestaltung sind alle Eingangsanschlüsse intern mit bidirektionalen Gleichspannungswandler verbunden, so dass alle Gleichspannungseingangsanschlüsse sowohl für den Entlade- wie auch den Ladebetrieb einer angeschlossenen Speicherbatterie geeignet sind. Hiermit wird eine maximal flexible Nutzung der Wechselrichteranordnung erreicht.

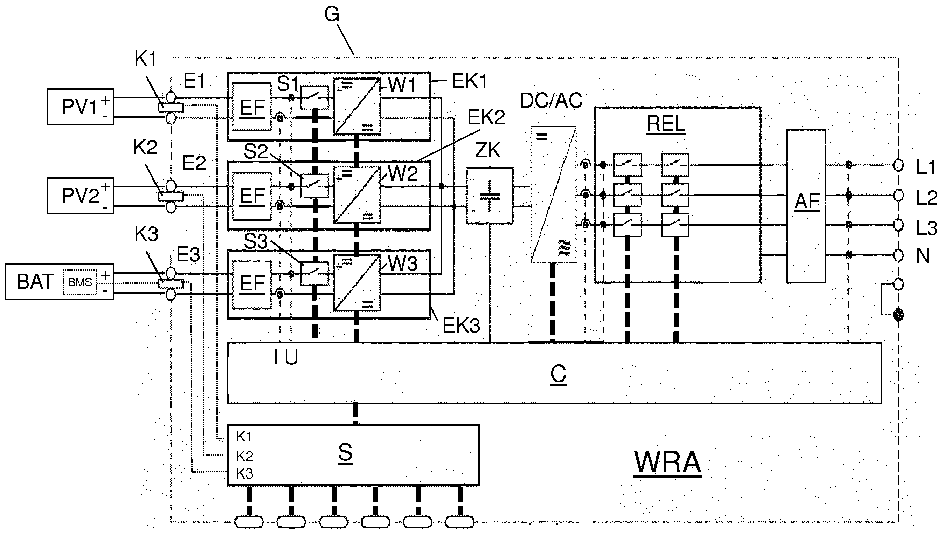

Vorteilhaft ist, wenn dabei alle Gleichspannungseingangsanschlüsse hinsichtlich ihrer Anschlussstellen und internen Schaltungsausführungen identisch ausgeführt sind. Durch die identische Ausführung aller Eingangskreise vereinheitlicht sich deren Aufbau, wodurch sich eine Kosteneinsparung erreichen lässt. Auch wird keine spezielle Hardware benötigt, um Gleichspannungseingangsanschlüsse, die für nur spezielle Eingangsspannungsquellen ausgelegt sind, gegen Fehlanschlüsse zu schützen. Besonders kostensparend ist, dass aufgrund der universellen Anschlussmöglichkeiten die gesamte Wechselrichteranordnung nicht in unterschiedlichen Ausführungsvarianten gefertigt zu werden braucht.
Der Aufbau, die Funktionsweise sowie besondere Eigenschaften der erfindungsgemäßen Wechselrichteranordnung sollen nachfolgend anhand der Zeichnung näher erläutert werden. Die einzige Figur zeigt den schematischen Aufbau einer Photovoltaikanlage mit einer erfindungsgemäßen Wechselrichteranordnung.

Die Wechselrichteranordnung WRA ist innerhalb eines Gehäuses G aufgebaut, dessen Begrenzungen durch eine gestrichelte Umrandung symbolisch dargestellt sind. Komponenten, die von außerhalb des Gehäuses G zugänglich sind, wie Gleichspannungseingangsanschlüsse E1, E2, E3, Anschlüsse der Ausgangsleitungen L1, L2, L3, N, sowie die externen Anschlüsse eines Schnittstellenbausteins S sind auf dieser Umrandung liegend dargestellt.

Die Wechselrichteranordnung WRA weist mehrere, hier beispielhaft drei Gleichspannungseingangsanschlüsse E1, E2, E3 auf, von denen jeder mit jeweils einem Eingangskreis EK1, EK2, EK3 verbunden ist. Die Eingangskreise EK1, EK2, EK3 weisen jeweils ein EMC-Eingangs-Filter EF, einen in eine Eingangsleitung eingeschleiften Trennschalter S1, S2, S3 sowie einen Gleichspannungswandler W1, W2, W3 auf.

Des Weiteren sind in jedem Eingangskreis EK1, EK2, EK3 hier nicht näher beschriebene Mittel zur Bestimmung der Strom- und Spannungswerte I, U auf den Eingangsleitungen vorgesehen, welche durch einen Controller C erfasst werden. Der Controller C steuert darüber hinaus alle aktiven Komponenten der Wechselrichteranordnung WRA. So kontrolliert der Controller C in den Eingangskreisen EK1, EK2, EK3 die Taktung der Gleichspannungswandler W1, W2, W3, sowie im Fehlerfall, das Auslösen der Trennschalter S1, S2, S3.

Die Ausgänge aller drei Gleichspannungswandler W1, W2, W3 sind zu einem Zwischenkreis ZK geführt, der zugleich am Eingang einer Wechselrichterbrücke DC/AC liegt. Die Taktung der Wechselrichterbrücke DC/AC wird wiederum auf grundsätzlich bekannte Weise durch den Controller C gesteuert. Der Controller C kann zudem über eine Relaisgruppe REL, die auch durch mehrere Schütze gebildet sein kann, die Phasenleiter L1, L2, L3 der hier dreiphasigen Wechselrichterbrücke DC/AC allphasig ein- und ausschalten. Über ein Ausgangs-EMC-Filter AF sind die Ausgangsleitungen L1, L2, L3, N bis zu Ausgangsanschlüssen geführt.

Es ist vorgesehen, dass mindestens einer der Gleichspannungswandler W1, W2, W3 bidirektional ausgeführt ist, was es ermöglicht, dass an dem zugehörigen Gleichspannungseingangsanschluss E1, E2, E3 eine Speicherbatterie BAT angeschlossen und dort sowohl entladen als geladen werden kann.

Es sei im Folgenden angenommen, dass die Gleichspannungswandler W1, W2, W3 aller drei Eingangskreise EK1, EK2, EK3 bidirektional ausgeführt sind, und darüber hinaus, dass alle drei Eingangskreise EK1, EK2, EK3 in ihrem Aufbau und ihrer Funktionsweise identisch ausgeführt sind. Diese ermöglicht es einerseits, die drei Eingangskreise EK1, EK2, EK3 kostengünstig aus identischen Modulen aufzubauen und andererseits, entweder eine oder auch mehrere Speicherbatterien BAT an die Gleichspannungseingangsanschlüsse E1, E2, E3 anzuschließen.

Ob eine oder mehrere Speicherbatterien BAT an den Gleichspannungseingangsanschlüssen E1, E2, E3 angeschlossen sind und falls ja, an welchen oder welche, ermittelt der Controller C mittels einer oder mehrerer Kommunikationsschnittstellen K1, K2, K3. In dem die den hier dargestellten Ausführungsbeispiel ist jeder der drei Gleichspannungseingangsanschlüssen E1, E2, E3 eine jeweils eigene Kommunikationsschnittstellen K1, K2, K3 zugeordnet. Alternativ kann auch für alle drei Gleichspannungseingangsanschlüssen E1, E2, E3 eine gemeinsame Kommunikationsschnittstellen vorgehen werden, die dann vorteilhaft in Form eines Kommunikationsbusses ausgeführt sein kann.

Die Kommunikationsschnittstellen K1, K2, K3 oder der Kommunikationsbus sind im Fall von mindestens einer angeschlossenen Speicherbatterie BAT jeweils mit dem internen Batteriemanagementsystem BMS der Speicherbatterie BAT verbunden sind.

Die Kommunikationsschnittstellen K1, K2, K3 sind mit einem Schnittstellenbaustein S verschaltet dargestellt, der wiederum mit dem Controller C verbunden ist. Über den Schnittstellenbaustein S kann der Controller C lesend und schreibend auf die Kommunikationsschnittstellen K1, K2, K3 zugreifen.

Zur Erkennung einer angeschlossenen Speicherbatterie BAT kann der Controller C unterschiedliche Verfahren verwenden. So kann der Controller C zur Ermittlung einer angeschlossenen Speicherbatterie BAT einmalig oder zyklisch wiederholt einen Kommunikationsversuch über alle Kommunikationsschnittstellen K1, K2, K3 einleiten. Ist das Batteriemanagement BMS der Speicherbatterie BAT hinreichend intelligent, so kann es Antwortdaten an die Kommunikationsschnittstelle K1, K2, K3 zurücksenden. Hierdurch erkennt der Controller C sowohl eine angeschlossene Speicherbatterie BAT als auch den durch die Speicherbatterie BAT belegten Gleichspannungseingangsanschluss E1, E2, E3.

Der Controller C kann etwa über eine oder alle Kommunikationsschnittstellen K1, K2, K3 eine Anforderung an eine potentiell angeschlossene Speicherbatterie BAT aussenden, ihre Spannung nach einem Zeitmuster zu- und abzuschalten. Kann der Controller C das Spannungsmuster plausibel auf den Eingangsleitungen eines Eingangskreises EK1, EK2, EK3 erfassen, so ist dadurch die Belegung des zugehörigen Gleichspannungseingangsanschlusses E1, E2, E3 mit einer Speicherbatterie BAT erkannt.

Als weitere Möglichkeit kann der Controller C durch Ansteuerung eines bidirektionalen Gleichspannungswandlers W1, W2, W3 an einem Gleichspannungseingangsanschluss E1, E2, E3 ein zeitliches Spannungsmuster einstellen. Wird das Spannungsmuster von einer Speicherbatterie BAT erkannt und an eine Kommunikationsschnittstelle K1, K2, K3 zurückgemeldet, so ist die Belegung des zugehörigen Gleichspannungseingangsanschlusses E1, E2, E3 mit einer Speicherbatterie BAT erkannt.

Der Controller C kann an den Gleichspannungseingangsanschlüssen E1, E2, E3 durch Ansteuerung eines bidirektionalen Gleichspannungswandlers W1, W2, W3 einen Lade- oder Entladebetrieb für eine Speicherbatterie BAT einstellen. Stimmen dabei die erfassten Strom- und/oder Spannungswerte I, U mit erwarteten Werten plausibel überein, so ist eine angeschlossene Speicherbatterie BAT erkannt.

Der Controller C kann zudem durch Ansteuerung eines Gleichspannungswandlers W1, W2, W3 den zugehörigen Gleichspannungseingangsanschluss E1, E2, E3 wie für einen Photovoltaikgenerator PV1, PV2 belasten. Dadurch wird ein fehlerhafter Betrieb eines Photovoltaikgenerators PV1, PV2 verhindert. An den zugehörigen Eingangsleitungen erfasst der Controller C eine Strom-Spannungs-Kennlinie. Anhand der erfassten Kennlinie kann der Controller C überprüfen, ob an dem zugehörigen Gleichspannungseingangsanschluss E1, E2, E3 ein Photovoltaikgenerator PV1, PV2 angeschlossen ist.

### Bezugszeichen

- BAT: Speicherbatterie
- BMS: Batteriemanagementsystem (der Speicherbatterie)
- C: Controller
- DC/AC: Wechselrichterbrücke
- E1, E2, E3: Gleichspannungseingangsanschlüsse
- EK1, EK2, EK3: Eingangskreise
- EF: EMC-Eingangs-Filter
- AF: EMC-Ausgangs-Filter
- G: Gehäuse
- I: Stromwerte
- K1, K2, K3: Kommunikationsschnittstelle
- L1, L2, L3, N: Ausgangsleitungen
- L1, L2, L3: Phasenleiter
- PV1, PV2: Photovoltaikgenerator
- REL: Relaisgruppe
- S1, S2, S3: Trennschalter
- S: Schnittstellenbaustein
- ST: Steuerschnittstelle
- U: Spannungswerte
- W1, W2, W3: Gleichspannungswandler
- WRA: Wechselrichteranordnung
- ZK: Zwischenkreis (Eingang der Wechselrichterbrücke)

## Patentansprüche

1. Wechselrichteranordnung (WRA) für eine Photovoltaikanlage,
mit mehreren Gleichspannungseingangsanschlüssen (E1, E2, E3), an die jeweils ein Photovoltaikgenerator (PV1, PV2) angeschlossen werden kann und von denen mindestens ein Gleichspannungseingangsanschluss (E3) alternativ zum Anschluss einer Speicherbatterie (BAT) geeignet ist,
wobei alle Gleichspannungseingangsanschlüsse (E1, E2, E3) jeweils über einen Gleichspannungswandler (W1, W2, W3) gemeinsam mit dem Eingang (ZK) einer Wechselrichterbrücke (DC/AC) verbunden sind, und
mit einem Controller (C), der dazu angepasst ist die Gleichspannungswandler (W1, W2, W3) und die Wechselrichterbrücke (DC/AC) zu steuern, und der dazu angepasst ist, anhand von an dem mindestens einen Gleichspannungseingangsanschluss (E3) erfassten Spannungs- und/oder Stromverläufen eine angeschlossene Speicherbatterie (BAT) zu erkennen, **dadurch gekennzeichnet,**
**dass** mindestens der Gleichspannungswandler (W1, W2, W3) an dem Gleichspannungseingangsanschluss (E1, E2, E3), der alternativ zum Anschluss einer Speicherbatterie (BAT) geeignet ist, bidirektional ausgeführt ist, dass mindestens eine Kommunikationsschnittstelle (K1, K2, K3) vorgesehen ist, die dazu angepasst ist mit dem internen Batteriemanagement (BMS) der anschließbaren Speicherbatterie (BAT) zu kommunizieren, und dass der Controller (C) dazu angepasst ist, unter Verwendung von Daten von der Kommunikationsschnittstelle (K1, K2, K3) eine an einem Gleichspannungseingangsanschluss (E1, E2, E3) angeschlossene Speicherbatterie (BAT) zu erkennen.

2. Wechselrichteranordnung nach Anspruch 1, **dadurch gekennzeichnet, dass** alle mit den Gleichspannungseingangsanschlüssen (E1, E2, E3) verbundenen Gleichspannungswandler (W1, W2, W3) bidirektional ausgeführt sind.

3. Wechselrichteranordnung nach Anspruch 1 oder 2, **dadurch gekennzeichnet, dass** alle Gleichspannungseingangsanschlüsse (E1, E2, E3) hinsichtlich ihrer Anschlussstellen und internen Schaltungsausführungen identisch ausgeführt sind.

4. Wechselrichteranordnung nach Anspruch 1, **dadurch gekennzeichnet, dass** jeder Gleichspannungseingangsanschluss (E1, E2, E3) eine ihm zugeordnete Kommunikationsschnittstelle (K1, K2, K3) aufweist.

5. Wechselrichteranordnung nach Anspruch 1, **dadurch gekennzeichnet, dass** für alle Gleichspannungseingangsanschluss (E1, E2, E3) eine gemeinsame Kommunikationsschnittstelle vorgesehen ist, die als ein Kommunikationsbus ausgeführt ist.

6. Wechselrichteranordnung nach Anspruch 1, **dadurch gekennzeichnet, dass** der Controller (C) dazu angepasst ist, Strom- und Spannungswerte (I, U) auf den Leitungen der Gleichspannungseingangsanschlüsse (E1, E2, E3) zu erfassen.

7. Wechselrichteranordnung nach Anspruch 1, **dadurch gekennzeichnet, dass** bei jedem Gleichspannungseingangsanschluss (E1, E2, E3) in die Verbindungsleitung zum zugehörigen Gleichspannungswandler (W1, W2, W3) ein durch den Controller (C) steuerbarer Trennschalter (S1, S2, S3) geschaltet ist.

8. Wechselrichteranordnung nach Anspruch 7 **dadurch gekennzeichnet, dass** der Controller (C) dazu angepasst ist, anhand von an der/den Kommunikationsschnittstelle(n) (K1, K2, K3) erfassten Daten und/oder von erfassten Strom- und Spannungswerten (I, U) auf den Leitungen der Gleichspannungseingangsanschlüsse (E1, E2, E3) eine ungeeignete, fehlerhafte oder verpolt angeschlossene Speicherbatterie (BAT) zu erkennen und die Speicherbatterie (BAT) durch Ansteuerung der Trennschalter (S1, S2, S3) des zugehörigen Gleichspannungseingangsanschlusses (E1, E2, E3) vom zugehörigen Gleichspannungswandler (W1, W2, W3) zu trennen.

9. Wechselrichteranordnung nach Anspruch 1, **dadurch gekennzeichnet, dass** die mindestens eine Kommunikationsschnittstelle (K1, K2, K3) mit dem Batteriemanagementsystem (BMS) einer anschließbaren Speicherbatterie verbindbar ist, und dass der Controller (C) dazu angepasst ist, anhand der an der/den Kommunikationsschnittstelle(n) (K1, K2, K3) anliegender Daten und an den Leitungen der Gleichspannungseingangsanschlüssen (E1, E2, E3) anliegenden Spannungswerte (U) und/oder Stromwerte (I) zu ermitteln, an welchem Gleichspannungseingangsanschlusses (E1, E2, E3) oder welchen Gleichspannungseingangsanschlüssen (E1, E2, E3) eine Speicherbatterie (BAT) angeschlossen ist.

10. Wechselrichteranordnung nach Anspruch 2, **dadurch gekennzeichnet, dass** die Gleichspannungswandler (W1, W2, W3) dazu angepasst sind, durch den Controller (C) gesteuert zu werden, und der Controller (C) bei einer am zugehörigen Gleichspannungseingangsanschluss (E1, E2, E3) angeschlossenen Speicherbatterie (BAT) den Betrieb eines bidirektionalen Gleichspannungswandler (W1, W2, W3) automatisch zwischen Lade- und Entladebetrieb der Speicherbatterie (BAT) umzuschalten.

11. Wechselrichteranordnung nach Anspruch 1, **dadurch gekennzeichnet** und dazu angepasst, dass ein Benutzer der Wechselrichteranordnung (WRA) manuell einstellen kann, welche Spannungsquellen (PV1, PV2, BAT) zum Anschluss an den Gleichspannungseingangsanschlüsse (E1, E2, E3) vorgesehen sind, und dass der Controller (C) dazu angepasst ist, anhand von erfassten Stromwerten (I), Spannungswerten (U) und/oder von an der/den Kommunikationsschnittstellen (K1, K2, K3) erfassten Daten den Gleichspannungseingangsanschlüsse (E1, E2, E3) fehlerhaft zugeordnete, fehlerhaft angeschlossene oder fehlerhaft funktionierende Spannungsquellen (PV1, PV2, BAT) zu erkennen und den zugehörigen Gleichspannungseingangsanschluss (E1, E2, E3) durch Ansteuerung des zugehörigen Trennschalters (S1, S2, S3) abzuschalten.

12. Wechselrichteranordnung nach Anspruch 1, **dadurch gekennzeichnet, dass** der Controller (C) dazu angepasst ist, die Gleichspannungseingangsanschlüsse (E1, E2, E3) automatisch oder zyklisch auf angeschlossene oder abgeklemmte Spannungsquellen (PV1, PV2, BAT) zu überprüfen und die zugehörigen Gleichspannungseingangsanschlüsse (E1, E2, E3) im laufenden Betrieb der Wechselrichteranordnung (WRA) zu- oder abzuschalten.

## Claims

1. Inverter arrangement (WRA) for a photovoltaic system.
with several DC voltage input connections (E1, E2, E3), to each of which a photovoltaic generator (PV1, PV2) can be connected and of which at least one a DC voltage input connection (E3) is suitable as an alternative to a connection to a storage battery (BAT).
whereby all DC voltage input connections (E1, E2, E3) are connected jointly via a DC voltage converter (W1, W2, W3) to the input (ZK) of an inverter bridge (DC/AC) and
with a controller (C) which is adjusted to control the DC voltage converters (W1, W2, W3) and the inverter bridge (DC/AC) and which is adjusted to detect, based on voltage and/or current patterns logged by at least one DC voltage input connection (E3), if a storage battery (BAT) is connected
**characterized by the fact:**
that at least the DC voltage converter (W1, W2, W3) at the DC voltage input connection (E1, E2, E3) which is suitable as an alternative to the connection to a storage battery (BAT) is structured to be bi-directional
that at least one communication interface (K1, K2, K3) is provided, which is able to communicate with the internal battery management (BMS) of the storage battery (BAT) which may be connected and
that the controller (C) is able, using data from the communication interface (K1, K2, K3) to detect a storage battery (BAT) connected to a DC voltage input connection (E1, E2, E3)

2. An inverter arrangement as Claim 1, **characterized by** the fact that all the DC converters (W1, W2, W3) connected to the DC voltage input connections (E1, E2, E3) are structured as b-directional

3. An inverter arrangement as Claim 1 or 2, **characterized by** the fact that all the DC voltage input connections (E1, E2, E3) are structured identically regarding their connection points and internal switching arrangements

4. An inverter arrangement as Claim 1, **characterized by** the fact that each DC voltage input connection (E1, E2, E3) has a communication interface (K1, K2, K3) allocated to it.

5. An inverter arrangement as Claim 1, **characterized by** the fact that, for all DC voltage input connections (E1, E2, E3) a common communication interface is provided which is structured as a communication bus.

6. An inverter arrangement as Claim 1, **characterized by** the fact that the controller (C) is able to log current and voltage levels (I, U) on the wiring of the DC voltage input connections (E1, E2, E3)

7. An inverter arrangement as Claim 1, **characterized by** the fact that, with each DC voltage input connection (E1, E2, E3) an isolator switch (S1, S2, S3), which can be controlled by the controller (C), is switched in the connecting wiring to the associated DC voltage converter (W1, W2, W3)

8. An inverter arrangement as Claim 7, **characterized by** the fact that the controller (C) is able, based on the data logged at the communication interface(s) (K1, K2, K3) and/or current and voltage levels (I, U) on the wiring to the DC voltage input connections (E1, E2, E3) to detect an inappropriate, defective or incorrect-polarity connected storage battery (BAT) and to isolate the storage battery (BAT) by operating the isolator switches (S1, S2, S3) at the associated DC voltage input connection (E1, E2, E3) from the associated DC voltage converter (W1, W2, W3).

9. An inverter arrangement as Claim 1, **characterized by** the fact that at least one communication interface (K1, K2, K3) can be connected to the battery management system (BMS) of a storage battery which can be connected and that the controller (C) is able, based on the data held at the communication interface(s) (K1, K2, K3) and the voltage levels (U) and/or current levels (I) on the wiring to the DC voltage input connections (E1, E2, E3) to determine to which DC voltage input connection (E1, E2, E3) or which DC input voltage connections (E1, E2, E3) a storage battery (BAT) is connected.

10. An inverter arrangement as Claim 2, **characterized by** the fact that the DC voltage converters (W1, W2, W3) are able to be controlled by the controller (C) and the controller (C), with a storage battery (BAT) connected to one of the associated DC voltage input connection (E1, E2, E3) can switch the operation of a bi-directional DC voltage converter (W1, W2, W3) automatically between charging and discharging of the storage battery (BAT)

11. An inverter arrangement as Claim 1, **characterized by** the fact that and adjusted in such a way that a user of the inverter (WRA) can set manually which voltage sources (PV1, PV2, BAT) are provided for connection to the DC voltage input connections (E1, E2, E3) and that the controller (C) is able, based on logged current levels (I), voltage levels (U) and/or the data logged at the communication interfaces (K1, K2, K3) to detect the voltage sources (PV1, PV2, BAT) wrongly allocated to, wrongly connected to or wrongly functioning with the DC voltage input connections (E1, E2, E3) and switch off the associated DC voltage input connection (E1, E2, E3) by actuating the associated isolator switch (S1, S2, S3).

12. An inverter arrangement as Claim 1, **characterized by** the fact that the controller (C) is able to check the DC voltage input connections (E1, E2, E3) automatically or cyclically for connected or disconnected voltage sources (PV1, PV2, BAT) and to switch on or off the associated DC voltage input connections (E1, E2, E3) while the inverter arrangement (WRA) is operating.

## Revendications

1. Ensemble onduleur (WRA) pour une installation photovoltaïque,
avec plusieurs raccordements d'entrée de tension continue (E1, E2, E3) à chacun desquels un générateur voltaïque (PV1, PV2) peut être raccordé et dont au moins un raccordement d'entrée de tension continue (E3) st alternativement apte au raccordement d'une batterie de stockage (BAT),
sachant que tous les raccordements d'entrée de tension continue (E1, E2, E3) sont reliés en commun à l'entrée (ZK) d'un pont d'onduleur (DC/AC) chacun par l'intermédiaire d'un convertisseur de tension continue (W1, W2, W3) et
avec un contrôleur (C) qui est apte à commander le convertisseur de tension continue (W1, W2, W3) et le pont d'onduleur (DC/AC) et qui est apte à reconnaître, au moyen des évolutions de tension et / ou de courant, saisies à l'au moins un raccordement d'entrée de tension continue (E3), une batterie de stockage (BAT) branchée,
**caractérisé en ce que**
au moins le convertisseur de tension continue (W1, W2, W3) sur les raccordements d'entrée de tension continue (E1, E2, E3), lequel est apte au raccordement d'une batterie de stockage (BAT), est de conception bidirectionnelle,
qu'au moins une interface de communication (K1, K2, K3) est prévue, laquelle est apte à communiquer avec le management de batterie (BMS) de la batterie de stockage (BAT) raccordable, et que
le contrôleur (C) est apte à reconnaître une batterie de stockage (BAT) raccordée à un raccordement d'entrée de tension continue (E1, E2, E3) en utilisant des données d'une interface de communication (K1, K2, K3).

2. Ensemble onduleur selon la revendication 1, **caractérisé en ce que** tous les convertisseurs de tension continue (W1, W2, W3), reliés aux raccordements d'entrée de tension continue (E1, E2, E3), sont de conception bidirectionnnelle.

3. Ensemble onduleur selon revendication 1 ou 2, **caractérisée en ce que** tous les raccordements d'entrée de tension continue (E1, E2, E3) sont réalisés identiquement quant à leurs points de raccordement et leurs circuits internes.

4. Ensemble onduleur selon la revendication 1, **caractérisé en ce que** chaque raccordement d'entrée de tension continue (E1, E2, E3) présente une interface de communication (K1, K2, K3) qui lui est associée.

5. Ensemble onduleur selon la revendication 1, **caractérisé en ce que** pour tous raccordements d'entrée de tension continue (E1, E2, E3) est prévue une interface de communication commune, qui est réalisée en tant que bus de communication.

6. Ensemble onduleur selon la revendication 1, caractérisé en ce le contrôleur (C) est apte à saisir des données de courant et de tension (I, U) sur les raccordements d'entrée de tension continue (E1, E2, E3).

7. Ensemble onduleur selon la revendication 1, caractérisé en ce, pour chaque raccordement d'entrée de tension continue (E1, E2, E3), un sectionneur (S1, S2, S3), pouvant être commandé par le contrôleur (C) est connecté dans la conduite de liaison au convertisseur de tension continue (W1, W2, W3) associé.

8. Ensemble onduleur selon la revendication 7, **caractérisé en ce que** le contrôleur (C) est apte à reconnaître, sur la base de données saisies sur l'interface / les interfaces de communication (K1, K2, K3) et / ou de valeurs de courant et de tension (I, U) sur les conduites des raccordements d'entrée de tension continue (E1, E2, E3), une batterie de stockage (BAT) inappropriée, défectueuse ou mal pôlée et de séparer la batterie de stockage (BAT) du convertisseur de tension continue (W1, W2, W3) associé par excitation du sectionneur (S1, S2, S3) du raccordement d'entrée de tension continue (E1, E2, E3) associé.

9. Ensemble onduleur selon la revendication 1, **caractérisé en ce que** l'au moins une interface de communication (K1, K2, K3) peut être raccordé au management de batterie (BMS) d'une batterie de stockage (BAT) connectable et que le contrôleur (C) est apte à déterminer, sur la base de données saisies sur l'interface / les interfaces de communication (K1, K2, K3) et / ou de valeurs de tension (U) et / ou de valeurs de courant (I) présentes sur les interface de communication (K1, K2, K3) et sur les conduites des raccordements d'entrée de tension continue (E1, E2, E3), à quels raccordements d'entrée de tension continue (E1, E2, E3) ou à quelles raccordements d'entrée de tension continue (E1, E2, E3) une batterie de stockage (BAT) est raccordée.

10. Ensemble onduleur selon la revendication 2, **caractérisé en ce que** le convertisseur de tension continue (W1, W2, W3) est apte à être commandé par le contrôleur (C) et que le contrôleur (C), quand une batterie de stockage (BAT) est raccordée au raccordements d'entrée de tension continue (E1, E2, E3) correspondant, st apte à commuter automatiquement le fonctionnement d'un convertisseur de tension continue (W1, W2, W3) bidirectionnel entre fonctionnent de charge et fonctionnement de charge de la batterie de stockage (BAT).

11. Ensemble onduleur selon revendication 1 ou 2, **caractérisé en ce que** et adapté à ce qu'il permet à un utilisateur de l'ensemble onduleur (WRA) de régler manuellement quelles sources de tension (PV1, PV2, BAT) sont prévues pour le raccordement aux raccordements d'entrée de tension continue (E1, E2, E3) et que le contrôleur (C) est apte à reconnaitre, sur la base valeurs de courant (I), valeurs de tension (U) saisies et / ou de données saisies sur l'interface / les interfaces de communication (K1, K2, K3), des sources de tension (PV1, PV2, BAT) incorrectement associées aux raccordements d'entrée de tension continue (E1, E2, E3), incorrectement raccordées ou fonctionnant incorrectement, et de déconnecter les raccordements d'entrée de tension continue (E1, E2, E3) afférents par excitation du sectionneur correspondant (S1, S2, S3).

12. Ensemble onduleur selon la revendication 1, **caractérisé en ce que** le contrôleur (C) est apte à vérifier automatiquement ou cycliquement les raccordements d'entrée de tension continue (E1, E2, E3) quant aux sources de tension (PV1, PV2, BAT) branchés ou débranchés et à connecter ou déconnecter les raccordements d'entrée de tension continue (E1, E2, E3) afférents pendant le fonctionnant de l'ensemble onduleur (WRA).
